# EUROPÄISCHE PATENTSCHRIFT

(11) **EP 1 738 617 B1**
(45) Veröffentlichungstag und Bekanntmachung des Hinweises auf die Patenterteilung: **30.11.2011**
(21) Anmeldenummer: 05742228.9
(22) Anmeldetag: 31.03.2005
(51) Int. Cl.: H05B 37/02, H05B 33/08

(54) **VORRICHTUNG ZUR LICHTREGELUNG**
LIGHT REGULATION DEVICE
DISPOSITIF POUR REGLER UNE LUMIERE

(30) Priorität: 15.04.2004 DE 102004018912
(43) Veröffentlichungstag der Anmeldung: 03.01.2007
(73) Patentinhaber: Osram AG, 81543 München (DE)
(72) Erfinder: LANGGASSNER, Wolfgang, 83043 Bad Aibling (DE); PILZ, Axel, 74632 Neuenstein (DE)
(86) Internationale Anmeldenummer: PCT/DE2005/000572
(87) Internationale Veröffentlichungsnummer: WO 2005/101917

(56) Entgegenhaltungen:
- WO-A-01/82656
- US-A- 5 089 748
- US-A1- 2002 171 377
- US-B1- 6 445 139

## Beschreibung

### Technisches Gebiet

Die vorliegende Erfindung betrifft eine Vorrichtung zur Lichtregelung, insbesondere eine Vorrichtung zur Lichtregelung mit mindestens einem Lichtsensor, der an seinem Ausgang einen Istwert für die Helligkeit bereitstellt, mindestens einem Regler, dem neben diesem Istwert ein Sollwert für die Helligkeit zuführbar ist, einer Anzahl n von Ausgangsanschlüssen, wobei n größer gleich zwei ist, wobei jeder Ausgangsanschluss mit dem Ausgang eines Reglers zur Änderung des Lichtstroms von jeweils mindestens einem Leuchtmittel gekoppelt ist, wobei der Regler ausgelegt ist, eine Differenz zwischen Soll- und Istwert zu ermitteln und zu prüfen, ob diese Differenz innerhalb oder außerhalb eines vorgebbaren Toleranzbandes liegt und für den Fall, dass die Differenz außerhalb des Toleranzbandes liegt, den Lichtstrom der an den n Ausgangsanschlüssen anschließbaren Leuchtmittel entsprechend zu ändern.

### Stand der Technik

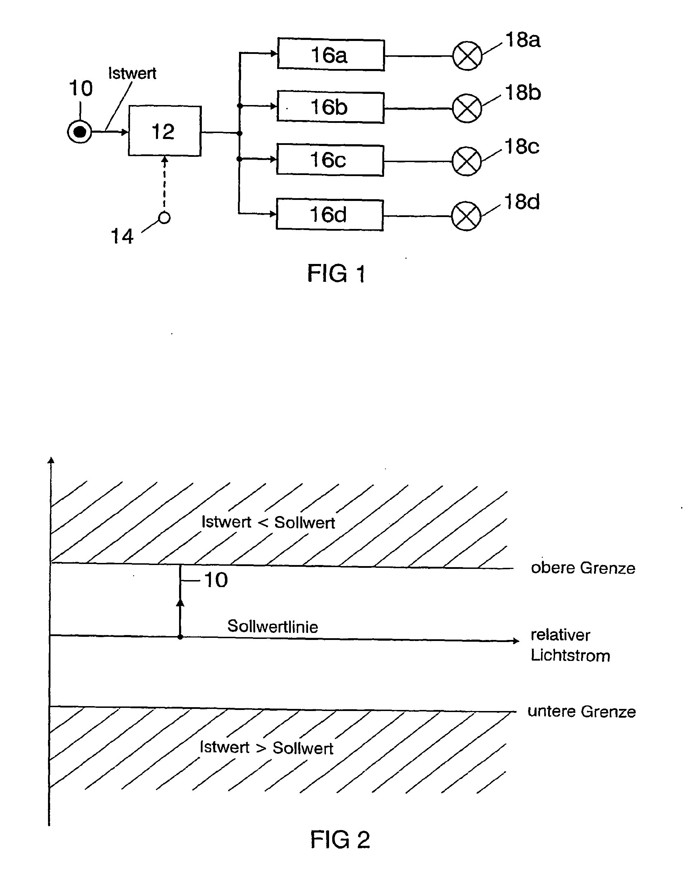

Eine derartige, aus dem Stand der Technik bekannte Vorrichtung zur Lichtregelung ist in Figur 1 dargestellt und soll zur Erläuterung der der Erfindung zugrunde liegenden Problematik herangezogen werden. Figur 1 zeigt eine derartige Vorrichtung mit einem Lichtsensor 10, der einen Istwert an einen Regler 12 bereitstellt. Diesem wird weiterhin aus einer Vorgabevorrichtung 14, beispielsweise einem Speicher mit einer Benutzerschnittstelle, weiterhin ein Sollwert zugeführt. Der Ausgang des Reglers 12 ist mit mehreren elektronischen Vorschaltgeräten 16a bis 16d verbunden, wobei jedes elektronische Vorschaftgerät 16a bis 16d ein Leuchtmittel mit einem vom Regler 12 eingestellten Lichtstrom ansteuert. Die Regelung erfolgt nach dem in Figur 2 dargestellten Diagramm, bei dem die Differenz aus Sollwert und Istwert über dem relativen Lichtstrom aufgetragen ist. Zu erkennen ist eine Sollwertlinie, um die herum ein Toleranzband angelegt ist. Wird es beispielsweise am Abend dunkler, beginnt die Differenz Sollwert minus Istwert anzuwachsen, siehe die Linie 10, bis die obere Grenze des Toleranzbandes erreicht ist. Daraufhin ändert der Regler 12 das an seinem Ausgang bereitgestellte Signal derart, dass das daran angeschlossene Leuchtmittel oder die daran angeschlossenen Leuchtmittel aufgeregelt werden, d. h. der den Leuchtmitteln zugeführte Lichtstrom erhöht wird. Der vom Regler 12 ausgegebene neue Dimmvorgabewert wird demnach von allen angeschlossenen elektronischen Vorschaltgeräten 16a bis 16d einheitlich in eine neue Dimmstellung umgesetzt. Dieser Vorgang wiederholt sich bis zur Ausregelung der Regelabweichung.

Ein Nachteil dieser bekannten Vorrichtung besteht darin, dass häufig kein Platz vorhanden ist für die Unterbringung des Reglers 12. Auch erfordert der zentrale Regler 12 eine zusätzliche Verdrahtung. Die Verwendung eines zentralen Reglers 12 bringt daher unerwünschte Kosten mit sich.

Die grundsätzliche Lösung dieser Problematik besteht darin, jedem elektrischen Vorschaltgerät einen Regler zuzuordnen. Damit muss keine Montage des Reglers 12 an einem zentralen Ort erfolgen. Vielmehr kann die Montage gemeinsam mit den elektronischen Varschaltgeräten erfolgen. Diese Lösung unter Verwendung des aus dem Stand der Technik bekannten Toleranzbandes hat sich jedoch in der Praxis ohne zusätzliche Maßnahmen als unpraktikabel herausgestellt: Je nach Positionierung der jeweiligen Lampe zum Lichtsensor können die unabhängig voneinander arbeitenden, den einzelnen elektronischen Vorschaltgeräten zugewiesenen Regler auseinander laufen. In der Konsequenz bedeutet dies, dass zur Erreichung des gewünschten Lichtsollwerts einige Lampen komplett abgeschaltet sein können, während andere Lampen voll aufgeregelt sind. Dies ist einerseits unerwünscht, da dies zu einer ungleichmäßigen Beleuchtung des zu beleuchtenden Raums führen kann. Zwar bringt ein geringer Wert einer Differenz zwischen Sollwert und Istwert zum Ausdruck, dass der gewünschte Beleuchtungswert im Wesentlichen erreicht ist, jedoch gilt dies nur für den Ort, an dem der Sensor angebracht ist. Wenn man sich als zu beleuchtenden Raum einen Gruppenarbeitsplatz vorstellt, bei dem die Lampen zwei bis drei Meter auseinander liegen, so kann dies dazu führen, dass einige Plätze zu hell, andere zu wenig beleuchtet sind. Andererseits führt dies zu einem früheren Ausfall derjenigen Lampen, die häufig voll aufgeregelt betrieben werden, was insbesondere bei schwer zugängliche Lampen, z.B. in Werkhallen, ein bedeutender Nachteil ist.

Die Offenlegungsschrift WO 01/82656 offenbart eine Beleuchtungsvorrichtung mit einem auswechselbaren elektrolumineszierenden Leuchtmittel, einer Steuerungseinrichtung für die Lichtintensität des Leuchtmittels und einem Lichtsensor zur Messung des von dem Leuchtmittel emittierten Lichts.

Die Offenlegungsschrift US 2002/0171377 A1 beschreibt ein Verfahren und eine Vorrichtung zur Beleuchtung von Flüssigkeiten.

### Darstellung der Erfindung

Der vorliegenden Erfindung liegt deshalb die Aufgabe zugrunde, eine eingangs genannte Vorrichtung zur Lichtregelung derart weiterzubilden, dass auch bei Verwendung mehrerer Regler eine möglichst gleichmäßige Ausleuchtung eines zu beleuchtenden Raumes erzielt werden kann.

Diese Aufgabe wird gelöst durch eine Vorrichtung mit den Merkmalen von Patentanspruch 1.

Der vorliegenden Erfindung liegt die Erkenntnis zugrunde, dass die obige Aufgabe gelöst werden kann, wenn die Grenzen des Toleranzbandes, bei deren Überschreiten ein Regelvorgang ausgelöst wird, abhängig gemacht werden vom aktuellen Wert des Lichtstroms. Diese Lösung resultiert darin, dass sich die Dimmstellungen der einzelnen elektronischen Vorschaltgeräte einander angleichen, da Extremwerte bei Abweichungen als Erste in die Regelung einbezogen werden. Unter Dimmstellung ist erfindungsgemäß die Zuführung eines bestimmten Lichtstroms an das entsprechende Leuchtmittel zu verstehen. Bei Versorgung aus einer anderen Quelle als dem elektronischen Vorschaltgerät kann darunter auch ein Signal zu verstehen sein, welches die andere Quelle entsprechend ansteuert. Mit anderen Worten wird mit dem Regler bei einer zunehmenden negativen Abweichung (= zu hell) als Erstes das Toleranzband verlassen und dadurch ein Abregelungsvorgang ausgelöst, der den höchsten relativen Lichtstrom ausgibt. Umgekehrt beginnt bei einer positive Abweichung der Regler, der den niedrigsten relativen Lichtstrom zugeordnet ist, als erstes Gerät aufzuregeln. Damit werden Abweichungen in den Dimmstellungen der einzelnen Geräte automatisch, quasi selbstkorrigierend, abgebaut.

Selbstverständlich ist die erfindungsgemäße Ausgestaltung des Toleranzbandes auch bei Vorrichtungen zur Lichtregelung mit Reglern gemäß dem Stand der Technik möglich, wobei jedem EVG ein Regler als separates Steuergerät zugeordnet ist. Insbesondere lässt sich die Erfindung auch einsetzen bei Vorrichtungen zur Lichtregelung, wobei jedem Regler ein eigener Sensor zugeordnet ist.

Bei einem Labormuster einer erfindungsgemäßen Vorrichtung konnte eine Maximalabweichung der Dimmstufen der einzelnen Leuchtmittel voneinander unter 10 % gehalten werden.

Bei einer bevorzugten Ausführungsform der vorliegenden Erfindung startet die Regelung in jedem Regler individuell, d. h. unabhängig von den anderen, wenn die Differenz zwischen Ist- und Sollwert außerhalb des Toleranzbandes liegt, wobei die Regelung erst mit Erreichen des Sollwerts und nicht bei Erreichen der Toleranzbandgrenze endet. Darunter ist auch zu verstehen, dass im Zuge einer Regelung der Sollwert über- bzw. unterschritten wird, wobei der Vorzeichenwechsel im Regler erkannt wird und dies verwendet wird um den Regelvorgang zu beenden. Dadurch wird sichergestellt, dass unabhängig von der Regelungsrichtung in etwa der gleiche Zielwert eingestellt wird.

Unter einem Ausgangsanschluss ist im Sinne der vorliegenden Erfindung der Ausgang eines Reglers zu verstehen, der derart ausgebildet sein kann, dass daran ein oder auch mehrere Leuchtmittel angeschlossen werden können, wobei bzw. so dass alle angeschlossenen Leuchtmittel mit demselben Lichtstrom angesteuert werden.

Erfindungsgemäß können die obere oder die untere Grenze des Toleranzbandes oder beide abhängen vom aktuellen Wert des Lichtstroms.

Bevorzugt ist innerhalb des Toleranzbandes eine Sollwertlinie angeordnet, wobei die Sollwertlinie der oberen Grenze des Toleranzbandes umso näher kommt, je niedriger der Wert des Lichtstroms ist. Bevorzugt berührt die Sollwertlinie die obere Grenze des Toleranzbandes im minimalen Wert des Lichtstroms.

Umgekehrt ist bevorzugt, wenn die Sollwertlinie der unteren Grenze des Toleranzbandes umso näher kommt, je größer der Wert des Lichtstroms ist. In einer bevorzugten Ausführungsform berührt die Sollwertlinie die untere Grenze des Toleranzbandes im maximalen Wert des Lichtstroms.

Durch die beiden zuvor erwähnten bevorzugten Ausführungsformen wird sichergestellt, dass eine Regelung bei extremen Werten des Lichtstroms schon bei geringsten Abweichungen vorgenommen wird, während bei umgekehrten Vorzeichen der Abweichung dort die Toleranz maximal ist.

Wie bereits erwähnt, ist es bevorzugt, wenn jedem Ausgangsanschluss ein Regler zugeordnet ist, wobei es besonders bevorzugt ist, wenn jeder Regler in einem zugehörigen elektrischen Vorschaltgerät angeordnet ist. Dies basiert auf der Überlegung, dass ohnehin in jedem elektronischen Vorschaltgerät ein Mikroprozessor vorhanden ist, der in einfacher Weise auch für die Regelung des Lichtstroms verwendet werden kann. Dies resultiert weiterhin in dem Vorteil, dass der Regler in demselben Gehäuse wie das elektronische Vorschaltgerät angeordnet ist und daher eine separate Installation bzw. eine separate Verdrahtung völlig entfällt.

Eine weitere bevorzugte Ausführungsform zeichnet sich dadurch aus, dass jedem Regler ein Speicher zugeordnet ist, in dem eine Kennlinie und/oder ein Kennlinienfeld angelegt ist, das einem Leuchtmittel zugeordnet ist, insbesondere zur Festlegung des Regelverhaltens. Dadurch wird die Möglichkeit bereitgestellt, unterschiedliche Leuchtmittel einzusetzen, da jeweils separate Kennlinien und/oder Toleranzbänder hinterlegt werden können. Das Regelverhalten umfasst als Parameter insbesondere einen vorgebbaren Wert des Lichtstroms in Abhängigkeit der ermittelten Differenz zwischen Sollwert und Istwert und/oder die Regelgeschwindigkeit. Beispielsweise kann in diesem Zusammenhang auch berücksichtigt werden, dass aufgrund einer exponentiellen Dimmkurve eine Änderung um einen DALI-Dimmscliritt bei hohem Lichtstrom absolut gesehen eine größere Veränderung des Lichts als bei geringem Lichtstrom bewirkt.

Um auch den ungünstigsten Fall, nämlich dass eine installierte Lampe überhaupt keinen Einfluss auf den Lichtsensor hat, beispielsweise durch Installation außerhalb des Erfassungsbereichs, zu beherrschen, ist erfindungsgemäß vorgesehen, die Änderung des Lichtstroms in vorgebbaren Dimmschritten vorzunehmen, wobei die Anzahl der Dimmschritte, d.h. die stufenweise Änderung des dem Leuchtmittel zugeführten Lichtstroms, innerhalb des Toleranzbandes auf einen vorgebbaren Wert begrenzt ist. Wird diese vorgebbare Anzahl an Dimmschritten im Rahmen der Regelung erreicht, wird die Regelung abgebrochen.

Weitere vorteilhafte Ausführungsformen ergeben sich aus den Unteransprüchen.

### Kurze Beschreibung der Zeichnungen

Im Nachfolgenden wird nunmehr ein Ausführungsbeispiel der Erfindung unter Bezugnahme auf die beigefügten Zeichnungen näher beschrieben. Es zeigen:
- Figur 1: eine aus dem Stand der Technik bekannte Vorrichtung zur Lichtregelung;
- Figur 2: das im Stand der Technik bei der Regelung verwendete Toleranzband;
- Figur 3: eine Ausführungsform einer erfindungsgemäßen Vorrichtung zur Lichtregelung; und
- Figur 4: das bei einer erfindungsgemäßen Vorrichtung zur Regelung verwendete Toleranzband.

### Bevorzugte Ausführung der Erfindung

Im Nachfolgenden werden für gleiche und gleichartige Elemente dieselben Bezugszeichen verwendet.

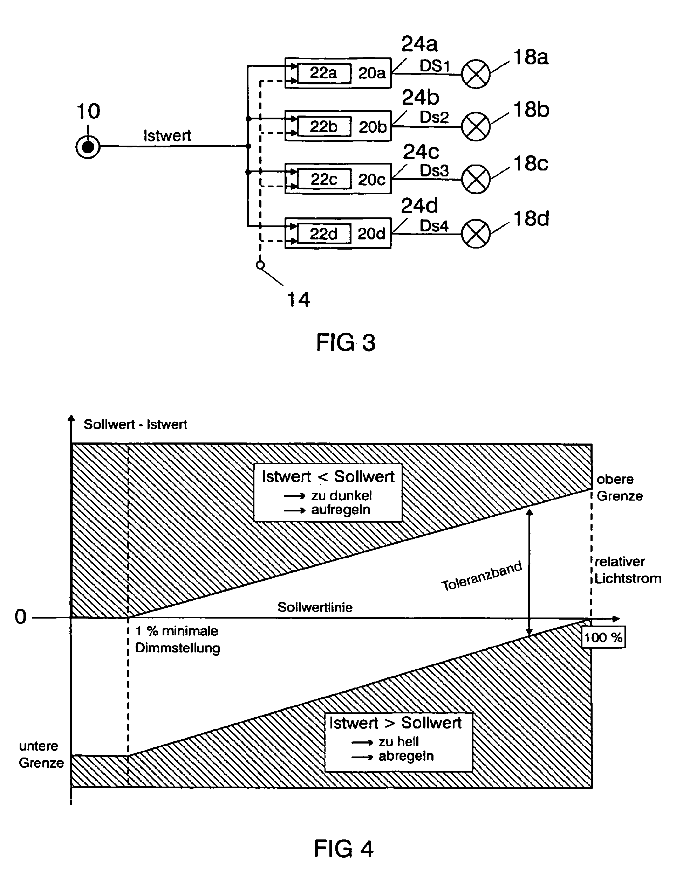

Figur 3 zeigt eine Ausführungsform einer erfindungsgemäßen Vorrichtung zur Lichtregelung. Sie umfasst einen Sensor 10, der einen Istwert an vier elektronische Vorschaltgeräte (EVG's) 20a bis 20d bereitstellt. Innerhalb der EVG's wird dieser Istwert neben einem von einer Vorrichtung 14 bereitgestellten Sollwert dem im jeweiligen elektronischen Vorschaltgerät angeordneten Regler 22a bis 22d zugeführt. Innerhalb des Reglers wird die Differenz aus Sollwert und Istwert ermittelt und festgestellt, ob diese innerhalb oder außerhalb des Toleranzbandes, siehe Figur 4, liegt. Die zulässige Abweichung hängt stark von dem aktuellen relativen Lichtstrom ab. Die Sollwertlinie kommt der oberen Grenze des Toleranzbandes umso näher, je niedriger der Wert des Lichtstroms ist. Umgekehrt kommt die Sollwertlinie der oberen Grenze des Toleranzbandes umso näher, je größer der Wert des Lichtstroms ist. Ist der Istwert kleiner dem Sollwert, ist demnach der Lichtstrom zu gering und es wird aufgeregelt. Im Gegenzug wird in dem Fall, in dem der Istwert größer dem Sollwert ist, abgeregelt. Wie aus Figur 3 hervorgeht, werden von den Reglern 22a bis 22d über Ausgangsanschlüsse 24a bis 24d individuelle Lichtströme an die Leuchtmittel 18a bis 18d angelegt, die vorliegend beispielhaft mit vier unterschiedlichen Dimmstellungen DS 1 bis DS 4 einhergehen. Jeder Regler 22a bis 22d verfügt über einen Speicher (nicht dargestellt), in dem eine Kennlinie und/oder ein Kennlinienfeld des dem jeweiligen Regler 22a bis 22d zugeordneten Leuchtmittels 18a bis 18d abgelegt ist. Als Folge der vorliegenden Erfindung können die Leuchtmittel 18a bis 18d unterschiedlich sein, beispielsweise eine Mischung aus LED's und Leuchtröhren.

Durch das in Figur 4 dargestellte Toleranzband wird erreicht, dass Geräte, die beispielsweise schon aufgeregelt haben, später weiter aufgeregelt werden als Geräte, die noch am meisten Regelungspotential aufweisen. Entsprechendes gilt beim Abregeln.

## Patentansprüche

1. Vorrichtung zur Lichtregelung mit
- mindestens einem Lichtsensor (10), der an seinem Ausgang einen Istwert für die Helligkeit bereitstellt,
- mindestens zwei Regler (22a bis 22d), denen neben diesem Istwert ein Sollwert für die Helligkeit zuführbar ist,
- einer Anzahl n von Ausgangsanschlüssen (24a bis 24d), wobei n größer gleich zwei ist, wobei jeder Ausgangsanschluss (24a bis 24d) mit dem Ausgang eines jeweiligen Reglers (22a bis 22d) zur Änderung des individullen Lichtstroms des jeweils mindestens eines an den regler angeschlossenen Leuchtmittels (18a bis 18d) gekoppelt ist, **dadurch gekennzeichnet,**
- **dass** jeder Regler (22a bis 22d) ausgelegt ist, eine Differenz zwischen Soll- und Istwert zu ermitteln und zu prüfen, ob diese Differenz innerhalb oder außerhalb eines vorgebbaren Toleranzbandes liegt und für den Fall, dass die Differenz außerhalb des Toleranzbandes liegt, den individullen Lichtstrom der an dem jeweiligen Ausgangsanschluss (24a bis 24d) anschließbaren Leuchtmittel (18a bis 18d) entsprechend zu ändern; und
**dass** zumindest eine Grenze des Toleranzbandes vom aktuellen Wert des Lichtstroms abhängt, wobei die obere Grenze des Toleranzbandes um so näher am Sollwert liegt je niedriger der Wert des individullen Lichtstroms ist und die untere Grenze des Toleranzbandes um so näher am Sollwert liegt je größer der Wert des Lichtstroms ist.

2. Vorrichtung nach Anspruch 1, wobei jedem Ausgangsanschluss (24a bis 24d) ein Regler (22a bis 22d) zugeordnet ist.

3. Vorrichtung nach Anspruch 2, wobei jeder Regler (22a bis 22d) in einem elektrischen Vorschaltgerät (20a bis 20d) angeordnet ist.

4. Vorrichtung nach Anspruch 2 oder 3, wobei jedem Regler (22a bis 22d) ein Speicher zugeordnet ist, in dem eine Kennlinie und/oder ein Kennlinienfeld abgelegt ist, das einem Leuchtmittel (18a bis 18d) zugeordnet ist, insbesondere zur Festlegung des Regelverhaltens und/oder der Festlegung der Form des Toleranzbandes.

5. Vorrichtung nach Anspruch 4, wobei das Regelverhalten als Parameter einen vorgebbaren Wert des Lichtstroms in Abhängigkeit der ermittelten Differenz zwischen Sollwert und Istwert und/oder die Regelgeschwindigkeit umfasst.

6. Vorrichtung nach einem der vorhergehenden Ansprüchen, wobei sie ausgelegt ist, die Änderung des Lichtstroms in vorgebbaren Dimmschritten vorzunehmen, und wobei die Anzahl der Dimmschritte innerhalb des Toleranzbandes auf einen vorgebbaren Wert begrenzt ist.

7. Vorrichtung nach Anspruch 6, wobei sie ausgelegt ist, die Regelung nach Erreichen der vorgebbaren Anzahl von Dimmschritten abzubrechen.

## Claims

1. Light regulation device having
- at least one light sensor (10), which provides an actual value for the brightness at its output,
- at least two regulators (22a to 22d), to which a desired value for the brightness can be supplied, in addition to this actual value,
- a number n of output connections (24a to 24d), where n is greater than or equal to two, each output connection (24a to 24d) being coupled to the output of a respective regulator (22a to 22d) for the purpose of changing the individual luminous flux of the respective at least one luminous means (18a to 18d) connected to the regulator, **characterized**
- **in that** each regulator (22a to 22d) being designed to determine a difference between the desired value and the actual value and to check whether this difference is within or outside a predeterminable tolerance range and, for the case in which the difference is outside the tolerance range, to change the individual luminous flux of the luminous means (18a to 18d), which can be connected to the respective output connection (24a to 24d), in a corresponding manner; and
**in that** at least one limit of the tolerance range depends on the present value for the luminous flux, the upper limit of the tolerance range coming closer to the desired value the lower the value of the individual luminous flux, and the lower limit of the tolerance range coming closer to the desired value the higher the value of the luminous flux.

2. Device according to Claim 1, wherein a regulator (22a to 22d) is associated with each output connection (24a to 24d).

3. Device according to Claim 2, wherein each regulator (22a to 22d) is arranged in an electric ballast (20a to 20d).

4. Device according to Claim 2 or 3, wherein a store is associated with each regulator (22a to 22d), in which store a characteristic and/or a family of characteristics is stored which has an associated luminous means (18a to 18d), in particular for the purpose of establishing the regulation response and/or establishing the form of the tolerance range.

5. Device according to Claim 4, wherein the regulation response comprises, as a parameter, a predeterminable value for the luminous flux depending on the determined difference between the desired value and the actual value and/or the regulation speed.

6. Device according to one of the preceding claims, wherein it is designed to carry out the change in the luminous flux in predeterminable dimming increments, and the number of dimming increments is limited to a predeterminable value within the tolerance range.

7. Device according to Claim 6, wherein it is designed to interrupt the regulation once the predeterminable number of dimming increments has been reached.

## Revendications

1. Dispositif pour régler une lumière, comprenant
- au moins un capteur de lumière (10) qui fournit à sa sortie une valeur effective de luminosité,
- au moins deux régulateurs (22a à 22d) auxquels une valeur de consigne de luminosité peut être amenée en plus de cette valeur effective,
- un nombre n de bornes de sortie (24a à 24d), n étant plus grand que deux, chaque borne de sortie (24a à 24d) étant reliée à la sortie d'un régulateur respectif (22a à 22d) pour modifier le courant lumineux individuel du à chaque fois au moins un moyen d'éclairage (18a à 18d) raccordé au régulateur,
**caractérisé**
- **en ce que** chaque régulateur (22a à 22d) est conçu pour déterminer une différence entre la valeur de consigne et la valeur effective et pour vérifier si cette différence est comprise ou non dans une bande de tolérance prédéfinissable et, dans le cas où la différence n'est pas comprise dans la bande de tolérance, pour modifier en conséquence le courant lumineux individuel des moyens d'éclairage (18a à 18d) pouvant être raccordés à la borne de sortie respective (24a à 24d) ; et
- **en ce qu'**au moins une limite de la bande de tolérance dépend de la valeur actuelle du courant lumineux, la limite supérieure de la bande de tolérance étant d'autant plus proche de la valeur de consigne que la valeur du courant lumineux individuel est faible et la limite inférieure de la bande de tolérance étant d'autant plus proche de la valeur de consigne que la valeur du courant lumineux est élevée.

2. Dispositif selon la revendication 1, un régulateur (22a à 22d) étant associé à chaque borne de sortie (24a à 24d).

3. Dispositif selon la revendication 2, chaque régulateur (22a à 22d) étant situé dans un ballast électrique (20a à 20d).

4. Dispositif selon la revendication 2 ou 3, une mémoire dans laquelle est déposé/e une courbe caractéristique et/ou un réseau de caractéristiques associé à un moyen d'éclairage (18a à 18d) étant associée à chaque régulateur (22a à 22d), notamment pour spécifier le comportement de régulation et/ou pour spécifier la forme de la bande de tolérance.

5. Dispositif selon la revendication 4, le comportement de régulation comprenant comme paramètre une valeur prédéfinissable du courant lumineux en fonction de la différence déterminée entre la valeur de consigne et la valeur effective et/ou la vitesse de régulation.

6. Dispositif selon l'une des revendications précédentes, le dispositif étant conçu pour modifier le courant lumineux par incréments d'atténuation prédéfinissables et le nombre des incréments d'atténuation dans la bande de tolérance étant limité à une valeur prédéfinissable.

7. Dispositif selon la revendication 6, le dispositif étant conçu pour mettre un terme au réglage une fois que le nombre d'incréments d'atténuation prédéfinissable est atteint.
